# EUROPEAN PATENT SPECIFICATION

(11) **EP 2 762 397 B1**
(45) Date of publication and mention of the grant of the patent: **05.08.2015**
(21) Application number: 14425009.9
(22) Date of filing: 30.01.2014
(51) Int. Cl.: B62M 11/02, B62M 11/10, B62M 11/16

(54) **Bicycle for riding equipped with a continuously variable transmission**
Fahrrad mit stufenlos einstellbarem Übersetzungsverhältnis
BICYCLETTE avec TRANSMISSION À VARIATION CONTINUE

(30) Priority: 04.02.2013 IT RM20130066
(43) Date of publication of application: 06.08.2014
(73) Proprietor: Micheli, Alfonso, 00061 Anguillara Sabazia (IT)
(72) Inventor: Micheli, Alfonso, 00061 Anguillara Sabazia (IT)
(74) Representative: Cioncoloni, Giuliana

(56) References cited:
- CH-A5- 638 146
- DE-A1- 4 129 082
- GB-A- 303 327
- GB-A- 2 349 125
- US-A- 3 944 253

## Description

The present invention relates to a bicycle for riding equipped with a continuously variable transmission. The continuously variable transmission according to the invention employs, in particular, an epicycloidal gear.

Already U.S. Patent 3,944,253, which is considered the closest prior art, describes a bicycle having a variable speed transmission including an epicycloidal gear. The epicycloidal gear comprises: a sun wheel operatively connectable to the driven wheel of the bicycle, an internal tooth ring gear being rotatably mounted with respect to the bicycle frame so as to be external to the bicycle driven wheel; at least two satellites being designed to engage simultaneously the sun wheel and a satellite carrier or planetary pinion, on which satellites are rotatably mounted; torque transmission means for transmitting the torque from the pedal cranks to the satellite carrier; and manually actuated control means for adjusting the amount of rotation of the internal tooth gear with respect to the frame, so that the rotation speed of the sun wheel and, therefore, the speed of rotation of the bicycle driven wheel can be influenced by means of a slip control of the internal tooth gear as a torque is applied to the satellite carrier.

In U.S. Patent 3,944,253 the sun wheel of the epicycloidal gear varies its speed of rotation thanks to a controlled variation of the speed of the internal tooth ring gear, which acts on the satellites of the planetary pinion driven by the pedal cranks.

However, there are doubts about the operation of the variable speed transmission according to U.S. Patent 3,944,253. If the movement in the epicycloidal gear is transmitted from the planetary pinion, in which the axes of the wheels are not fixed, with the internal tooth ring gear being not braked but completely free to rotate and with the sun wheel affected by even a small resisting force, such as the weight of the bicycle and of the rider, the mechanism rotates idle on sun wheel, and therefore there is no transmission of the movement from the drive shaft to the driven shaft. To overcome this problem, according to the present invention, a differential gear is commonly used together with a brake in other fields of the art where power is supplied by a motor.

For example, US-1,963,308 describes a reduction gear adapted to drive alternately two different parts of a crane from a single motor. These parts of the crane receive the movement by means of a differential gear having two bevel gears, a first of which is connected to the motor that is coupled with two planet wheels having two coaxial output shafts. The inner shaft, passing through the second bevel wheel opposite to that connected to the motor, receives the movement from the planet wheels via a T-shaped arm if the outer shaft, integral with the second bevel gear is held stationary with a brake acting on a crown keyed to it. The outer shaft on the other hand is driven by the second bevel gear if the differential gear is held in place by a brake.

It is clear that the U.S. patent 1,963,308, while having a differential gear and brakes acting on it, does not describe a variable speed drive, but a selector for the application of a driving force. U.S. 5,505,669 describes a power transmission device that includes a first and a second bevel gear rotatable about an axis of rotation, and two driven pinions between the two bevel gears with which they mesh. The power transmission device has a drive shaft which is concentrical with the input axis of rotation of the two bevel gears and puts them in rotation. The second bevel gear is integral with a disc which is controlled in its speed of rotation by means of a brake. The power transmission device according to U.S. Patent 5,505,669 is connected to a mechanical load.

The two bevel gears and the driven pinions are contained in a casing. The pinions are connected to the casing by means of respective axles rotatable around the same axis.

The casing is attached to a flywheel. In operation, if the device is installed on a car, the mechanical power output is controlled by the brake that adjusts the speed of rotation of the second bevel wheel.

If the resistance to rotation of the second bevel wheel is substantially increased, then the speed of rotation of the first bevel gear increases that rotates the output shaft, and the car moves. When the second bevel gear is maintained stationary by the brake, the output shaft will rotate at a speed of rotation which is a function of the transmission ratio of the first bevel gear with respect to the second bevel wheel.

U.S. 5,957,803 describes a continuously variable transmission comprising a planetary gear with input means moved by a prime mover, friction coupling means controlled to gradually slow down and stop the rotation of an idler wheel of the planetary gear, and an prime mover's output shaft. When the force of the clutch is increased, the power is automatically transferred from the idler wheel to the output shaft, starting with a slow speed with high torque to a fast speed with lower torque by scheduled increments which enable rotation of the output shaft, under load resistance, without prime mover stall.

As shown in the above mentioned documents there are in the state of the art continuously variable transmissions in which an epicycloidal gear train, more precisely of the type with bevel gears, or differential gear, is controlled by at least one brake. This kind of transmissions are also present in tracked vehicles with the functions of steering: steering brakes are connected to the half-shafts emerging from a differential gear in such a way that the speed is increased by braking a drive shaft on the driven shaft.

One object of the present invention is to enable a rider to vary in a continuous way the speed of the bicycle in correlation with a torque applied on the pedal cranks, and vice versa.

Another object of the present invention is to provide a continuous variation of speed with a differential gear that is mounted on a driven wheel hub and controlled by a brake.

To achieve the above mentioned objects, the invention provides a bicycle for riding equipped with a continuously variable transmission as defined in claim 1.

Further features and advantages of the present invention will become more apparent from a indicative, and therefore non-limiting description of a preferred but not exclusive embodiment, as illustrated in the accompanying drawing in which:
- Figure 1 is a schematic plan view of a continuously variable transmission according to the present invention connected to a drive means represented by pedal cranks of a bicycle;
- Figure 2 is an enlarged partial schematic view of the continuously variable transmission in Figure 1; and
- Figure 3 is a schematic view of an epicycloidal gear employed in the continuously variable transmission in Figure 1.

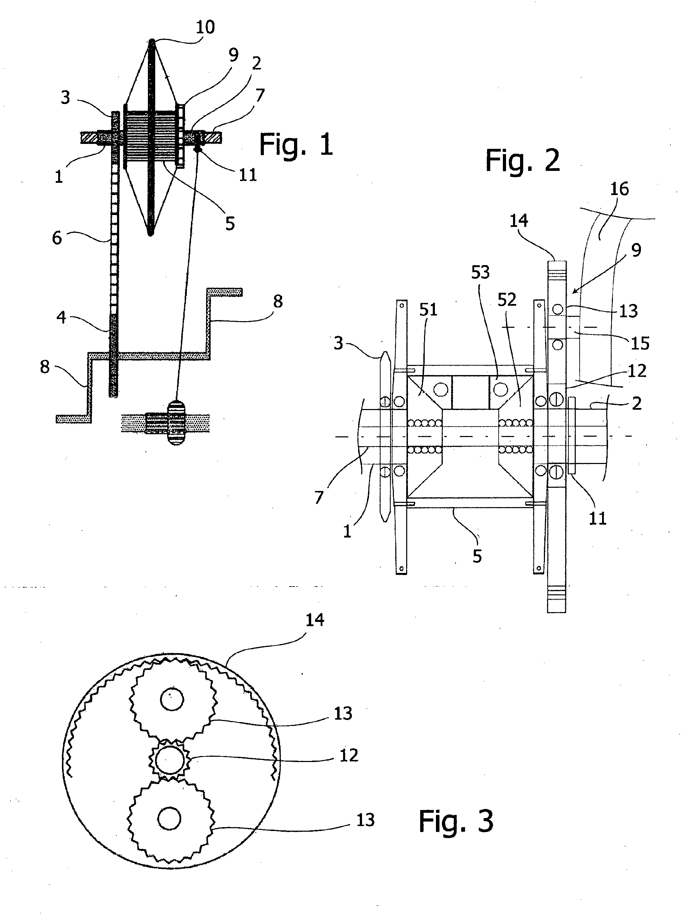

Referring to Figure 1, indicated as 8 is a pair of pedal cranks mounted integral with a shaft (not denoted with a reference number), as 4 a toothed wheel attached to the cranks, as 7 a hub of the driven wheel 10 of the bicycle. A differential gear 5 and an epicycloidal gear 9, the latter for the movement inversion, are concentrically side by side mounted and freely rotatable on the hub 7 of the driven wheel 10, as will be seen below. The epicycloidal gear 9 is of a traditional type having a sun wheel and one or more satellites. As shown in figure 3 by way of example, an epicycloidal gear comprises a sun wheel 12, two satellites 13 and an internally toothed wheel 14.

In particular, as shown in Figure 2 which is a schematic enlarged partial view of the continuously variable transmission in Figure 1, mounted on a first shaft 1 of the differential gear 5, integral to its first planet wheel 51 is a freewheel sprocket 3, being connected with a flexible transmission 6, for example a chain, to the toothed wheel 4 attached to the cranks. The planet wheel 51 engages a second planet wheel 52 keyed on a second shaft 2 of the differential gear 5 by a satellite 53 mounted on a small shaft integral with the cylindrical casing of the differential gear. A brake 11 is applied to the shaft 2 for opposing an adjustable resistance to the rotation thereof. The brake 11 means any braking system adapted to act on the rotation of the second planet wheel 52.

The continuously variable transmission according to the invention is able to adjust automatically and continuously the speed of rotation of the driven wheel 10 along the variation of the resistant torque applied to the shaft, while keeping constant the values of torque and number of revolutions of the shaft of the pedal cranks, and therefore in constancy of applied power.

In a first limit condition without an operation of the brake 11, the movement is transmitted from pedal cranks 8 to the freewheel sprocket 3, and then to the first differential gear planet wheel 51 that is integral with the freewheel sprocket 3. In this condition the movement is transmitted with the same direction of rotation and with the maximum ratio determined by the number of teeth of the toothed wheel 4 and of the freewheel sprocket 3. From the first planet wheel 51, through the satellite 53 of differential gear 5, the movement is transmitted to the second differential gear planet wheel 52, which rotates in a direction opposite to that of the first planet wheel. With the brake released, the movement of the second planet wheel 52 is transmitted to the sun wheel 12 of the epicycloidal gear 9 keyed by an interposed freewheel to the shaft 2 of the second planet wheel 52 and from the sun wheel 12, through satellites 13, 13 and the internally toothed wheel 14 of the epicycloidal gear 9 to the driven wheel 10. The internal toothed wheel 14 of the epicycloidal gear 9 transmits the movement to the driven wheel 10 in the same direction imposed by the crank and with a transmission ratio set by the diameters or teeth of the components of the epicycloidal gear 9. The epicycloidal gear 9 is actually such, because all the shafts of its components are fixed; in particular, also the satellites 13, 13 have fixed axis because, as shown in Figure 2, the shaft 15 of the satellite 13 is fixed on the element of the bicycle frame represented for example by a fork 16. In this way, the epicycloidal gear 9 only serves to reverse the direction of rotation of the internally toothed wheel 14 with respect to the second shaft of the differential gear and reduce, to the set value, the torque transmitted by the ratio crank / sprocket to the wheel 10 of the bicycle.

When the brake 11 stops the rotation of the second shaft 2 of the differential gear 5, in a second limit condition, the sun wheel 12 of the epicycloidal gear 9 is no longer bound to the differential gear 5. The torque transmitted through the flexible transmission 6 and the freewheel sprocket 3 rotates the casing of the differential gear 5 which in turn rotates the spokes of the driven wheel 10 with a minimum torque ratio. The internally toothed wheel 14 of the epicycloidal gear 9 is driven by the driven wheel 10 of the bicycle with its same direction of rotation. The same occurs to the satellite wheel 13, which in turn imparts an opposite rotation to the sun wheel 12, which, being keyed on the freewheel, rotates idle on the shaft 2 of the braked second planet wheel. In case of a braking action intermediate between the aforesaid first and second limit condition, the sun wheel 12 of the epicycloidal gear 9 rotates at intermediate rotation speeds and therefore there are different torque transmitted between the pedal cranks 8 and the driven wheel 10 of the bicycle.

In this way, by varying the brake operation on the second shaft of the differential gear, the rider can change the speed of the driven wheel and the torque applied by him/her to the pedal cranks, with the result of advancing in this way as preferred.

## Claims

1. A bicycle for riding equipped with a continuously variable transmission wherein an epicycloidal gear (9) comprising a sun wheel (12), at least one satellite (13) and an internally toothed wheel (14), is mounted concentrically to a hub (7) of a bicycle driven wheel (10) which receives a torque applied on bicycle pedal cranks (8) by torque transmission means including a flexible transmission (6) running between a toothed wheel (4) of the pedal cranks (8) and a freewheel sprocket (3) mounted concentrically to the hub (7) of the bicycle driven wheel (10), **characterised in that** concentrically mounted to the hub (7) of the bicycle driven wheel (10) is also a differential gear (5), having a casing from which a first differential gear shaft (1) and a second differential gear shaft (2) protrude, said freewheel sprocket (3) being mounted to the first differential gear shaft (1), and the sun wheel (12) of said epicycloidal gear (9) being keyed to the second differential gear shaft (2) by means of a freewheel, and a braking device (11) being mounted to the second differential gear shaft (2), the casing of the differential gear (5) supporting the spokes of the bicycle driven wheel (10) in such a manner that,
when, in a first limit condition, no braking is applied on the second differential gear shaft (2), the driving torque supplied by the pedal cranks (8) comes to the sun wheel (12) of the epicycloidal gear (9) through the flexible transmission (6), the freewheel sprocket (3), a first differential gear planet wheel (51), a differential gear satellite (53), a second differential gear planet wheel (52), and the sun wheel (12) transmits the driving torque through the satellites (13, 13) to the internally toothed wheel (14) of the epicycloidal gear (9), which engages the spokes of the bicycle driven wheel (10) by turning it with a maximum torque ratio, the axes of the epicycloidal gear (9) being fixed;
when, in a second limit condition a braking is applied on the second differential gear shaft (2) locking it, the torque through the flexible transmission (6), the freewheel sprocket (3) and the casing of the differential gear (5) turns the spokes of the driven wheel (10) with a minimum torque ratio, the internally toothed wheel (14) of the epicycloidal gear (9) rotating together with the casing of the differential gear (5) in the same direction of the bicycle driven wheel (10) but rotating the sun wheel (12) in the opposite direction, i.e. idler on the braked shaft, as the sun wheel (12) is keyed freewheel, and
a braking action intermediate between said first and second limit conditions leading to intermediate speeds of rotation of the sun wheel (12) of the epicycloidal gear (9) and then to different torque ratios transmitted between the pedal cranks (8) and the bicycle driven wheel (10).

## Patentansprüche

1. Ein Fahrrad, ausgerüstet mit einem kontinuierlich veränderlichen Getriebe, worin ein Planetengetriebe (9), umfassend ein Sonnenrad (12), mindestens einen Satelliten (13) und ein innenverzahntes Rad (14), konzentrisch zu einer Nabe (7) eines fahrradbetriebenen Rades (10) montiert ist, das ein auf Fahrrad-Tretkurbeln (8) durch Drehmomentübertragungsmittel aufgebrachtes Drehmoment erhält, umfassend eine biegsame Welle (6), die zwischen einem Zahnrad (4) der Tretkurbeln (8) und einem Freilaufritzel (3) läuft, das konzentrisch zu der Nabe (7) eines fahrradbetriebenen Rades (10) montiert ist, **dadurch gekennzeichnet, dass** konzentrisch zu der Nabe (7) des fahrradbetriebenen Rades (10) auch ein Differenzialgetriebe(5) montiert ist, das ein Gehäuse aufweist, aus dem eine erste Differenzialwelle (1) und eine zweite Differenzialwelle (2) herausragt, das besagtes Freilaufritzel (3) an der ersten Differenzialwelle (1) montiert ist, und das Sonnenrad (12) des besagten Planetengetriebes (9) mit der zweiten Differenzialwelle (2) mittels eines Freilaufs verkeilt ist, und eine Bremsvorrichtung (11), die an der zweiten Differenzialwelle (2) montiert ist, das Gehäuse des Differenzialgetriebes (5) trägt die Speichen des fahrradbetriebenen Rades auf eine Weise, dass
wenn bei einer ersten Grenzbedingung keine Bremsung auf die zweite Differenzialwelle (2) ausgeübt wird, das von den Tretkurbeln (8) abgegebene Antriebsdrehmoment das Sonnenrad (12) des Planetengetriebes (9) durch die biegsame Welle (6), das Freilaufritzel (3), einem ersten Differenzial-Planetenrad (51), einen Differenzial-Satelliten (53), einem zweiten Differenzial-Planetenrad (52) erreicht und das Sonnenrad (12) das Antriebsdrehmoment durch die Satelliten (13, 13) auf das innenverzahnte Rad (14) des Planetengetriebes (9) überträgt, welches an den Speichen des fahrradbetriebenen Rades (10) eingreift, indem es mit maximalem Drehmoment gedreht wird, mit festen Achsen des Planetengetriebes (9);
wenn bei einer zweiten Grenzbedingung eine Bremsung auf die zweite Differenzialwelle (2) ausgeübt wird und diese arretiert wird, dreht das Drehmoment durch die biegsame Welle (6), das Freilaufritzel (3) und das Gehäuse des Differenzialgetriebes (5) die Speichen des angetriebenen Rades((10) bei einem minimalen Drehmomentverhältnis, das innenverzahnte Rad (14) des Planetengetriebes (9) dreht zusammen mit dem Gehäuse des Differenzialgetriebes (5) in die gleiche Richtung des fahrradbetriebenen Rades(10), aber das Sonnenrad (12) dreht in die entgegen gesetzte Richtung, d. h. Losrad auf der Bremswelle, da das Sonnenrad (12) am Freilauf verkeilt ist, und ein Bremsvorgang zwischen der vorgenannten ersten und zweiten Grenzbedingung zu mittleren Drehgeschwindigkeiten des Sonnenrades (12) des Planetengetriebes (9) führt und dann zu anderen Verhältnissen des Drehmoments, das zwischen den Tretkurbeln (8) und dem fahrradbetriebenen Rad (10) übertragen **wird.**

## Revendications

1. Vélo doté d'une transmission variable en continu, dans lequel un engrenage épicycloïdal (9) comportant un planétaire (12), au moins un satellite (13) et une roue dentée à l'intérieur (14), est monté de façon concentrique sur un moyeu (7) de la roue menée (10) d'un vélo qui reçoit un couple appliqué sur les manivelles des pédales du vélo (8) par un moyen de transmission de couple comprenant une transmission flexible (6) qui passe entre une roue dentée (4) des manivelles des pédales (8) et un pignon de roue libre (3) monté de façon concentrique sur le moyeu (7) de la roue menée (10) du vélo, **caractérisé en ce qu'**un engrenage différentiel (5) est monté de façon concentrique sur le moyeu (7) de la roue menée (10) du vélo, comprenant un carter à partir duquel un premier axe d'engrenage différentiel (1) et un second axe d'engrenage différentiel (2) sont saillants, ledit pignon de roue libre (3) étant monté sur le premier axe d'engrenage différentiel (1), et le planétaire (12) dudit engrenage épicycloïdal (9) étant claveté sur le second axe d'engrenage différentiel (2) au moyen d'une roue libre, et un dispositif de freinage (11) étant monté sur le second axe d'engrenage différentiel (2), le carter de l'engrenage différentiel (5) supportant les rayons de la roue menée (10) du vélo de telle manière que,
quand, dans une première condition limite, aucun freinage n'est appliqué sur le second axe d'engrenage différentiel (2), le couple d'entraînement fourni par les manivelles des pédales (8) arrive au planétaire (12) de l'engrenage épicycloïdal (9) par l'intermédiaire de la transmission flexible (6), le pignon de roue libre (3), un premier satellite d'engrenage différentiel (51), un satellite d'engrenage différentiel (53), un second satellite d'engrenage différentiel (52), et le planétaire (12) transmet le couple d'entraînement par l'intermédiaire des satellites (13, 13) à la roue dentée à l'intérieur (14) de l'engrenage épicycloïdal (9), qui accouple les rayons de la roue menée (10) du vélo en la faisant tourner avec un rapport de couple maximal, les axes de l'engrenage épicycloïdal (9) étant fixes ;
quand, dans une seconde condition limite, un freinage est appliqué sur le second axe d'engrenage différentiel (2) et le verrouille, le couple à travers la transmission flexible (6), le pignon de roue libre (3) et le carter de l'engrenage différentiel (5) met en rotation les rayons de la roue menée (10) avec un rapport de couple minimum, la roue dentée à l'intérieur (14) de l'engrenage épicycloïdal (9) tournant avec le carter de l'engrenage différentiel (5) dans la même direction que celle de la roue menée (10) du vélo mais faisant tourner le planétaire (12) dans la direction opposée, c'est-à-dire arrêté sur l'axe freiné, car le planétaire (12) est claveté en roue libre, et une action de freinage intermédiaire entre ladite première et ladite deuxième conditions limites entraînant des vitesses de rotation intermédiaires du planétaire (12) de l'engrenage épicycloïdal (9) et à différents rapports de couple transmis entre les manivelles des pédales (8) et la roue menée (10) du vélo.
